(19) **Europäisches Patentamt / European Patent Office / Office européen des brevets**

(11) **EP 1 987 336 B1**

(12) **EUROPEAN PATENT SPECIFICATION**

(45) Date of publication and mention of the grant of the patent:
**30.05.2018 Bulletin 2018/22**

(51) Int Cl.:
***G01L 5/00*** *(2006.01)*

(21) Application number: **07710569.0**

(22) Date of filing: **14.02.2007**

(86) International application number:
**PCT/BE2007/000017**

(87) International publication number:
**WO 2007/093018 (23.08.2007 Gazette 2007/34)**

(54) **INTERNAL STRESS ACTUATED MICRO- AND NANOMACHINES FOR TESTING PHYSICAL PROPERTIES OF MICRO AND NANO-SIZED MATERIAL SAMPLES**

MIT INTERNER ANSPANNUNG BETÄTIGTE MIKRO- UND NANOMASCHINEN ZUM PRÜFEN PHYSIKALISCHER EIGENSCHAFTEN VON MATERIALPROBEN MIT MIKRO- UND NANOGRÖSSE

MICROMACHINES ET NANOMACHINES ACTIONNEES PAR UNE TENSION INTERNE POUR LE TEST DES PROPRIETES PHYSIQUES D'ECHANTILLONS DE MATERIAU DE TAILLE MICROMÉTRIQUE OU NANOMÉTRIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.02.2006 GB 0602923**

(43) Date of publication of application:
**05.11.2008 Bulletin 2008/45**

(73) Proprietor: **UNIVERSITE CATHOLIQUE DE LOUVAIN**
**1348 Louvain la Neuve (BE)**

(72) Inventors:
• **PARDOEN, Thomas**
  **B-1435 Mont Saint Guibert (BE)**
• **FABRÈGUE, Damien**
  **F-42800 Chateauneuf (FR)**
• **RASKIN, Jean-Pierre**
  **B-1348 Louvain-la-Neuve (BE)**
• **ANDRÉ, Nicolas**
  **B-7870 Lombise (BE)**
• **COULOMBIER, Michaël**
  **B-7760 Popuelles (BE)**

(74) Representative: **Office Kirkpatrick**
  **Avenue Wolfers, 32**
  **1310 La Hulpe (BE)**

(56) References cited:
**WO-A-00/28277    US-A- 5 786 621**

• **KRAMER T ET AL: "Surface micromachined ring test structures to determine mechanical properties of compressive thin films" SENSORS AND ACTUATORS A, ELSEVIER SEQUOIA S.A., LAUSANNE, CH, vol. 92, no. 1-3, 1 August 2001 (2001-08-01), pages 292-298, XP004274060 ISSN: 0924-4247**
• **LIWEI LIN ET AL: "A Micro Strain Gauge with Mechanical Amplifier" JOURNAL OF MICROELECTROMECHANICAL SYSTEMS, IEEE SERVICE CENTER, PISCATAWAY, NJ, US, vol. 6, no. 4, December 1997 (1997-12), XP011034767 ISSN: 1057-7157**

**Description**

FIELD OF THE INVENTION

This invention is in the field of micro- and nano-scale measurement techniques. The present invention particularly relates to internal stress (e.g. thermal stress and/or mechanical stress and/or growth stress) actuated micro- and nano-machines (e.g. micro-or nano-tensometers). The present invention also relates to their industrial applications such as measurement and testing methods of mechanical properties of small material samples, such as thin films, thin beams and thin multi-layers, making use of such machines.

BACKGROUND OF THE INVENTION

Materials and structures with micro- or nano-scale dimensions do not behave like conventional scale components. For instance, thin films or thin beams such as routinely used in microelectronics and micro-electromechanical systems (the latter being commonly referred to as MEMS) may exhibit certain defect structures having deleterious effects on the structural integrity and reliability of said thin films and, consequently, on the reliability of components including them through out their life expectancy. Furthermore, mechanical properties of sub-micron size structures exhibit significant size effects which very much affect the design of the micro and nano systems.

In order to perform quality control during manufacturing, or in order to gain better knowledge of the mechanical properties of existing thin films, thin beams or thin multi-layers, i.e. structures involving at least one micro- or nanoscale dimension, in view of improving their design, there is a need for reliable and cost-effective methods and devices for measuring these properties. Mechanical testing at micro- and nano-scales is quite difficult for a number of reasons:

- specimens of such size are easily damaged through handling,
- it is difficult to position specimens of such size to ensure uniform loading along specimen axes,
- specimens are difficult to attach to the instrument grips, inadequate load resolution, and
- data reduction formulas are hypersensitive to precise dimensional measurements.

Thin film measurement techniques include depth sensing indentation, bending and curvature, tensile testing, torsional testing and testing methods based on MEMS technology. Nanoscale measurement techniques include the manipulation and positioning of nanotubes, high-resolution force and displacement measurements, high-resolution transmission electron microscopy, and measurement techniques for nanotubes and nanowires. Mechanical properties of interest for micro- and nano-scale materials (such as metallic materials, carbon-based materials and silicon-base materials) include, but are not limited to, Young's modulus, yield strength, tensile strength and fracture strength.

Over the last few years, the interest for determining "on-chip " the mechanical properties of the thin films and multilayers used to build micro- and nanosystems has intensively increased. Several concepts of micromachines and loading set-ups have already been proposed. A first category of known devices requires the application of a force by external means, such as for instance by means of a nano-indenter. A second category of known devices require calibrated systems to provide an estimation of the load imposed by the micro-loading stage.

As an example, U.S. Patent No. 5,310,610 discloses silicon micro sensor comprising:

- a silicon substrate;
- a support film overlaying said substrate, said support film including a lower layer of silicon oxide film applied by a thermal oxidation method and an upper layer of aluminium oxide film applied by a sputtering method wherein the thickness of the aluminium oxide film is thicker than that of the silicon oxide film, said layers of said support film being heated at a predetermined temperature for a predetermined time thereby providing a flat stable configuration;
- a support element formed from a portion of said support film at an etched portion of said substrate; and
- a sensor element and electrode members applied to said support element.

The same document also discloses a manufacturing method for a support film of a silicon micro sensor which supports a sensor element thereon comprising:

- a step for forming a silicon oxide film on a silicon substrate using the thermal oxidation method;
- a step for forming an aluminium oxide film on the silicon oxide film using the sputtering method;
- a step for forming a mask for etching by processing the aluminium oxide film and the silicon oxide film using the photolithography technique; and
- a step for etching the silicon substrate using the mask to form the support element for the sensor element.

In the structure of this prior art, it is desirable to form the aluminium oxide film so as to have a thickness greater than that of the silicon oxide film so that it is hardly affected by the internal stress remaining in the silicon oxide film due to the thermal stress caused during the thermal oxidation processing. However, small internal stress (compression stress) remains in the aluminium oxide film in this stage. In order to release the internal stress in the aluminium oxide film, it is desirable to thermally treat it at a temperature of 500 to 800°C. Since the thermal expansion coefficient of the aluminium oxide film is greater than that of the silicon substrate, tension stress is generated during the thermal treatment and, thereby, the internal stress in the aluminium oxide film is cancelled.

U.S. Patent No. 5,310,610 does not teach or suggest making use of a difference between the thermal expansion coefficients of two thin film materials for providing measurements of mechanical properties of monolayers or multi-layers at the micro- or nano-scale.

There is still a need in the art for improving the existing methods for measuring the mechanical and/or electromechanical properties of small material samples, i.e. material samples having at least one dimension smaller than 10 $\mu$m such as thin films, thin beams and thin multi-layers, especially by making these methods more precise, reliable, simple and cost-effective. Other tensometers of the prior art are disclosed in "Surface micromachined ring test structures to determine mechanical properties of compressive thin films" by KRAMER T ET AL, p. 292-298 of SENSORS AND ACTUATORS A, ELSEVIER SEQUOIA S.A., LAUSANNE, CH, XP004274060, ISSN: 0924-4247, and in the document WO/28277.

DEFINITIONS

As used herein and unless stated otherwise, the terms "electromechanical", "opticomechanical", "chemico-mechanical" and thermomechanical when applied to e.g. properties refer to respectively electrical (e.g. conductivity), optical (e.g. refractive index), chemical (e.g. pH or surface tension) and thermal properties (e.g. thermal conductivity). Such properties may be induced by released internal stress.

As used herein and unless stated otherwise, the terms "internal stress" refers to forces trapped within a material rather than external forces applied to the material. When the terms "mechanical stress" or "thermal stress" or "growth stress" are used, they refer to stress of mechanical, thermal and growth origin respectively. By "growth origin" it must be understood "originating from the growth of the material during its deposition on an underlying substrate or layer". Generally any such residual stresses will simply be referred to as "stress".

As used herein, and unless stated otherwise, the term "release" refers to the action of removing most of the substrate (or the sacrificial layer if such a layer is present) from adjacent the entity to be released (e.g. the couple actuator-material sample to be tested or the material to be tested alone if it acts as its own actuator). It is convenient to keep a small portion of this substrate (or the sacrificial layer) under the entity to be released as an anchor point.

As used herein, and unless stated otherwise, the term "actuator" refers to a material within which resides internal stress. This may be a residual from a thermal or prior mechanical constraint or growth stress imposed during its deposition on a substrate and which can be used to induce a deformation to a material sample to be tested after release, said material to be tested being attached to the actuator. In the specific case of internal stress originating from a thermal constraint, an actuator can be characterised by a factor of merit defined as $E \times \Delta\alpha \times \Delta T$, with $E$ the Young modulus, $\Delta\alpha$ the difference of thermal expansion coefficient between the actuator and substrate material, and $\Delta T$ the temperature difference between the deposition temperature of the actuator material and the room temperature. The higher this factor of merit, the better is the actuator. Example of materials from which an actuator can be made include but are not limited to $Si_3N_4$, WC, $Al_2O_3$, Fe, Cu, AIN, SiC, W, $B_4C$, Ti, etc. For other origins of internal stresses, the factor of merit can be generally defined by the product $E \times \varepsilon_{mis}$, where $\varepsilon_{mis}$ is the mismatch strain resulting from the growth stresses or prior deformation (i.e. of mechanical origin).

The relaxation of internal stress inside the actuator layer is achieved by releasing it, i.e. by removing a constraining portion of the substrate or of a sacrificial layer (if such a layer is used) situated adjacent to, e.g. under the actuator in order to free it.

As used herein, and unless stated otherwise, the term "sacrificial layer" refers to a layer of material that is optionally placed between the substrate and the actuator-material couple to be tested. This layer is meant to be removed (e.g. melted or etched away) in order to release the actuator and the material to be tested. Examples of sacrificial layer include but are not limited to material of the general formula $SiO_2$, silicon (e.g. amorphous silicon, crystalline silicon, polysilicon), tungsten, a resist material (such as a photoresist as is well known to the person skilled in the art), removable polymeric material, etc. A sacrificial layer is preferably a material which can be removed (e.g. melted or etched away) in a specific solution without damaging the actuator and specimen materials.

As used herein, and unless stated otherwise, the terms "material sample to be tested", also referred to as "small material sample", "material sample", "specimen", "test sample", "test material sample", "material to be tested", "test material", "sample material", refer to any material for which we would like to measure electrical, mechanical, optical or physico-chemical properties or any properties derivable from such electrical, mechanical, optical or physico-chemical properties. Examples of material sample to be tested includes but are not limited to metals (e.g. aluminium, copper, titanium end the likes), polysilicon, silicon, silicon nitride, low-k dielectric and polymers (e.g. organic polymers) among others.

As used herein and unless otherwise specified, the term "substrate" refers to any material on which an actuator and a material sample to be tested can be applied. The substrate is not only the mechanical support of the micromachines, its thermomechanical properties play a role as well. Indeed, the factor of merit of the activator as presented above is directly related to the substrate thermal expansion coefficient ($\alpha$) when using thermal mismatch for actuation or to its capacity to generate large growth stresses during deposition. Example of substrates includes but are not limited to silicon, alumina, germanium, polymeric materials (e.g. PTFE often known as Teflon), group III-V material (such as e.g. GaAs or InP), metal (such as e.g. steel), etc.

As used herein and unless otherwise specified, the terms "etching solution" refers to a solution used to release the actuator and the material sample to be tested. Preferably, the etching solution etches properly the sacrificial layer without attacking the actuator and material to be tested, i.e. the etching solution is preferably characterised by a good etching selectivity between the sacrificial layer (or the substrate if no sacrificial layer is used) and the actuator and material sample to be tested. Examples of etching solutions comprise but are not limited to hydrofluoric acid based solution for etching silicon dioxide, Tetramethylammonium hydroxide (TMAH) based solution for etching polysilicon or silicon or amorphous silicon, hydrogen peroxide ($H_2O_2$) for etching tungsten and hydrofluoric acid / nitric acid / acetic acid mixture (HNA) based solutions for etching doped silicon or polysilicon among others.

## SUMMARY OF THE INVENTION

The present invention is unexpectedly based on a change in the approach of the mechanical testing of micrometer and nanometer scale films, beams, multilayers and volume elements, i.e. preferably samples having at least one dimension smaller than about 10 $\mu$m. According to an embodiment of the invention, stresses between one thin film material (such as, but not limited to, a silicon nitride film) called the actuator and a substrate material (such as, but not limited to a silicon wafer substrate) provide, after release, the actuation system. The stresses may be induced by any suitable means of which thermal stresses (due to the difference in thermal expansion coefficients) is only one example. For example, in another embodiment, mechanical stresses due to e.g. mechanical forces applied during the construction of the nano- or micro-machine or growth stresses appearing during the deposition due to microstructure evolution mechanisms provide, after release, the actuation system. The small material sample, such as a thin film, thin beam and thin multi-layers, to be tested is connected to both the actuator and the substrate (directly or via a sacrificial layer). By chemically and/or physically releasing the structure, i.e. by removing a portion of the substrate or of the sacrificial layer situated under the actuator and the micro-or nano-size material sample in order to free them, the actuator contracts and imposes a deformation pattern to the test sample. The nature of the etching method based on liquid or gas solution depends on the sacrificial layer, the actuator and specimen materials as well. The measurement of the displacement of the actuator provides the value of the strain field applied to the test material sample. A free (i.e. not connected to the test sample) actuator beam provides the reference required for a suitable data reduction scheme. The internal stress in the actuator is directly extracted from the contraction of the free and connected actuator, providing the Young's modulus of the actuator is known. Different strains can be imposed to the film by using various combinations of test sample and actuator lengths in order to generate full internal stress-strain curves up to the fracture strain. Additional stresses such as but not limited to mechanical or thermal additional stresses can be applied, after release, on the material to be tested. The concept of this invention is thus not focused onto one complex machine but rather relates to using multiple elementary machines.

## BRIEF DESCRIPTION OF THE DRAWINGS

Figure 1 schematically shows the manufacturing steps of an embodiment of a internal stress actuated micro- or nano-machine according to an embodiment of the present invention.

Figure 2 schematically shows an upper view of an embodiment of an internal stress actuated micro- or nano-machine for traction measurement according to an embodiment of the present invention.

Figure 3 schematically shows an upper view of an embodiment of an internal stress actuated micro- or nano-machine for compression measurement according to an embodiment of the present invention.

Figure 4 schematically shows an upper view of an embodiment of an internal stress actuated micro- or nano-machine for shear measurement according to an embodiment of the present invention.

Figure 5 shows two internal stress-strain curves obtained by using a micro- or nano-machine according to an embodiment of the present invention

Figure 6 schematically shows an upper view of an internal stress actuated micro- or nano-machine for incremental displacement loading according to an embodiment of the present invention.

Figure 7 schematically shows an upper view of an internal stress actuated micro- or nano-machine according to an embodiment of the present invention.

Figure 8 schematically shows an upper view of an internal stress actuated micro- or nano-machine according to an embodiment of the present invention.

Figure 9 schematically shows an upper view of prior art internal stress actuated micro- or nano-machine where the actuator and the test sample are made of the same material and form a single entity according to an embodiment of the present invention.

DETAILED DESCRIPTION OF THE INVENTION

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

In a first aspect, the present invention relates to a micro- or nano-tensometer for measuring one or more mechanical and/or electromechanical and/or opticomechanical, and/or chemico-mechanical and/or thermomechanical properties on a micro- or nano-size material sample, comprising an actuator and a substrate, and wherein internal stress provides, after chemical and/or physical release, a measure of a mechanical and/or electromechanical and/or opticomechanical, and/or chemico-mechanical and/or thermomechanical properties of the micro- or nano-size material sample.

In embodiments, the actuator may comprise an actuating material selected from the group consisting of silicon nitride, tungsten carbide, aluminium oxide, iron, copper, aluminium nitride, silicon carbide, tungsten, boron carbide and titanium.

In other embodiments, the substrate may comprise one or more materials selected from the group consisting of silicon, alumina, germanium, glass, ceramic, organic polymer, group III-V materials and metal.

In other embodiments, the micro- or nano-size material sample to be tested may be a thin aluminium film.

In other embodiments, the micro- or nano-size material sample to be tested may be silicon-based.

In other embodiments, the micro- or nano-size material sample to be tested may be carbon-based.

In other embodiments, the micro- or nano-size material sample to be tested may be a polymer.

In other embodiments, the chemical and/or physical release may be effected by means of etching.

In other embodiments, the chemical and/or physical release may be effected by one or more etching means selected from the group consisting of fluorhydric acid with a concentration from about 25% to about 85%, TMAH-based solution, plasma, $H_2O_2$ based solution and HNA solutions. The choice of the appropriate etching means permits to achieve a selective removal of the sacrificial layer or of the substrate if no sacrificial layer is used.

In other embodiments, one or more dimensions of the micro- or nano-size material sample to be tested may be from about 1 nm to about 5 $\mu$m.

In other embodiments, the actuator, the substrate, and the micro- or nano-size material sample to be tested may be arranged for traction measurement.

In other embodiments, the actuator, the substrate, and the material sample to be tested may be arranged for compression measurement.

In other embodiments, the actuator, the substrate, and the material sample to be tested may be arranged for shear measurement.

In other embodiments, the section of said actuator may vary along its length.

In other embodiments, the actuator may comprise at least two uniform portions of different sections.

This is advantageous because it permits the sequential release of one portion at a time, permitting the performance of more than one measurement with a single micro or nano-machine.

In other embodiments, the micro- or nano-tensometer may further comprise a sacrificial layer in contact with the actuator, the material sample and the substrate material.

This is advantageous because it permits to ease the releasing process.

In other embodiments, the micro- or nano-tensometer may further comprise one or more means for applying additional stress after release on said micro-or nano-size material sample to be tested.

In other embodiments, the one or more means for applying additional stress after release may be means selected from the group consisting of electrostatic means, magnetic means, mechanical means or thermal means.

In other embodiments, the micro- or nano-size material sample to be tested may be connected to both the actuator and the substrate. This will usually be the case when the sample is not its own actuator.

In other embodiments, the micro- or nano-size material sample to be tested and the actuator may be made of the same material and/or form a single entity.

This is advantageous for materials having a large internal tensile stress because it does not require a separate actuator. It is therefore simpler and cheaper to manufacture.

In other embodiments, the internal stress may be of thermal, growth or mechanical origin.

In a second aspect, the present invention relates to a method for measuring one or more mechanical and/or electromechanical and/or optiomechanical, and/or chemico-mechanical and/or thermomechanical properties on a micro- or nano-size material sample, comprising the steps of:

- providing one or more elementary micro- or nano-tensometer, each comprising an actuator involving internal stresses, a sample to be tested and a substrate, wherein, in each of said one or more elementary micro- or nano-tensometer, the material sample to be tested is connected to both the actuator and the substrate,
- releasing chemically and/or physically said material sample to be tested and said actuator in each of said one or more elementary micro- or nano-tensometer,
- measuring the displacement of the material sample to be tested and/or an electric current through the material to be tested and/or an optical signal from or through the sample to be tested and/or a physico-chemical state of the material to be tested in each of said one or more elementary micro- or nano-tensometer, and
- determining from said displacement and/or electric current and/or optical signal and/or physico-chemical state the one or more mechanical and/or electromechanical and/or opticomechanical, and/or chemico-mechanical and/or thermomechanical properties of the micro- or nano-size material sample.

In embodiments, in each of said one or more elementary micro- or nano-tensometer, the material sample to be tested may be connected to both the actuator and the substrate.

In embodiments, the method may further comprise the step of applying one or more additional stresses on said micro- or nano-size material sample after the release.

In a third aspect, the present invention relates to a method for manufacturing a micro- or nano-tensometer for measuring one or more mechanical and/or electromechanical and/or opticomechanical, and/or chemico-mechanical and/or thermomechanical properties on a micro- or nano-size material sample, comprising an actuator and a substrate, and wherein internal stress provides, after chemical and/or physical release, a measure of a mechanical and/or electromechanical and/or opticomechanical, and/or chemico-mechanical and/or thermomechanical properties of the micro- or nano-size material sample, said method comprising the steps of:

a) providing a substrate at a first temperature,
b) connecting an actuator to said substrate at a second temperature,
c) connecting a micro or nano-material sample to be tested to said substrate and to said actuator at a third temperature,

wherein said first, second and third temperatures are different or the same.

Optionally, the method of manufacturing may further comprise the step of exposing the micro- or nano-tensometer obtained to a temperature different from at least one of said first, second and third temperature.

In embodiments, when the micro- or nano-size material sample to be tested and the actuator are made of the same material and form a single entity, the method for manufacturing may comprise the steps of:

a) providing a substrate at a first temperature,
b) connecting a micro or nano-material sample to be tested to said substrate at a second temperature,

wherein said first and second temperatures are different or the same.

Optionally, the method for manufacturing a micro- or nano-tensometer may further comprise the step of exposing the micro- or nano-tensometer obtained to a temperature different from at least one of said first or second temperature.

In embodiments, the method for manufacturing may further comprise the step of providing one or more means for applying additional stress on said micro- or nano-size material sample to be tested.

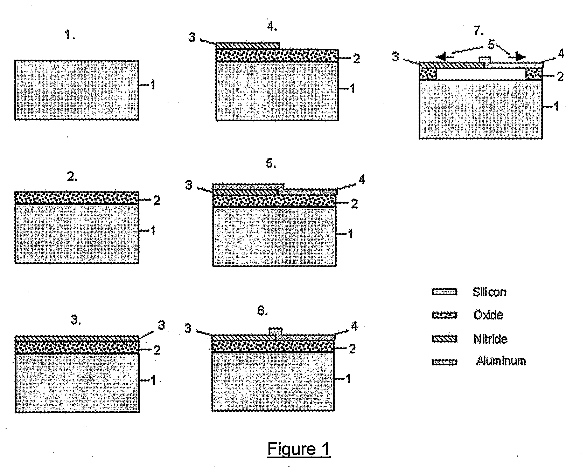

Based on the above-described general principle, several embodiments of the present invention will now be described by reference to figures 1 to 4.

As schematically shown in figure 1, a sacrificial layer 2 (typically an oxide layer) and a layer of a material (e.g. $Si_3N_4$) (herein referred as the " actuator ") 3 with a thermal expansion coefficient different from that of the substrate are deposited successively on a silicon substrate 1. Lithographic processing of the actuator 3 is then made in order to provide it with the desired shape, i.e. beams of different length and width. The actuator 3 is then etched, the etching step being followed by a deposit (e.g. by metallization) of the material to be tested, i.e. the small material sample, i.e. the material sample to be tested 4. The nature of this material can vary as function of the actual possibilities of deposit (e.g. aluminium). As previously, a lithographic process is performed in order to obtain the desired shape. Finally, in one embodiment of the invention, the sacrificial layer is etched. In another embodiment, exactly the same process is followed except that the origin of the internal stress comes from growth stresses occurring during the material deposition (e.g. chromium involves large internal stresses while deposited close to room temperature). In another embodiment, exactly the same process is followed except that the actuator is deposited onto a pre-deformed substrate (e.g. by bending). After deposition of the actuator, the system is unloaded and the process resumes with the lithography of the actuator and the steps similar to the sequence described above. In another embodiment, no sacrificial layer is deposited and the actuator is deposited directly on the substrate; a litography of the actuator 3 is made, the actuator 3 is then etched, the etching step being followed by a deposit of the material sample to be tested. A lithography is performed on the material sample to be tested and finally, in one embodiment of the invention, the material sample to be tested and the actuator are released by etching of the substrate below them.

According to a particular embodiment of the invention, tests have been performed wherein the actuator was deposited in a two-steps process and wherein a polycrystalline silicon layer or a silicon oxide layer was introduced between these two layers. Lithographic processing and a silicon etching were performed in order to obtain either a heating system or a piezo-resistive system.

Starting from the above-stated principles, several types of micro- and nano-machines according to this invention can be made in view of different types of mechanical and/or electromechanical properties measurements. Without implying any limitation in the micro- and nano-machines that can be made according to this invention, embodiments will now be detailed.

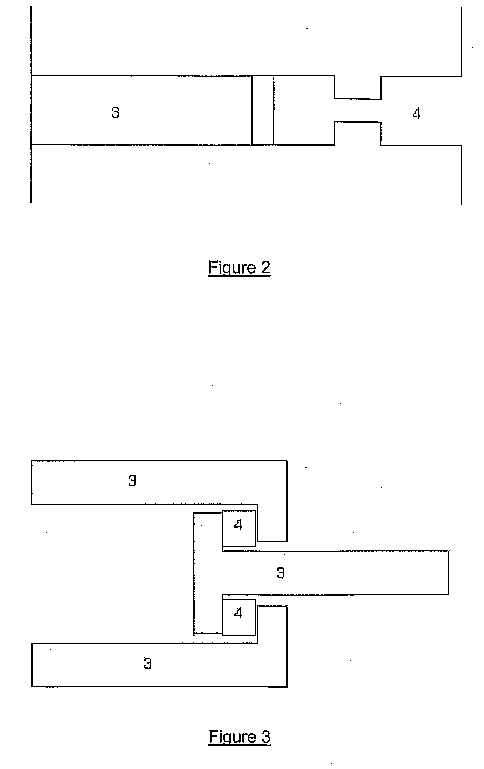

Figure 2 shows a top view of the construction principle of a pulling micro-or nano-machine of the invention with or without a reduced section of the material to be tested. It is important to mention that the invention is not limited thereto but that other geometries involving crack or holes are also possible. Here, the material sample to be tested is schematised overlapping on the actuator 3.

Figure 3 shows a top view of the construction principle of a compression micro- or nano-machine of the invention, wherein 4 designates the material to be tested. The actuators are labelled with number 3.

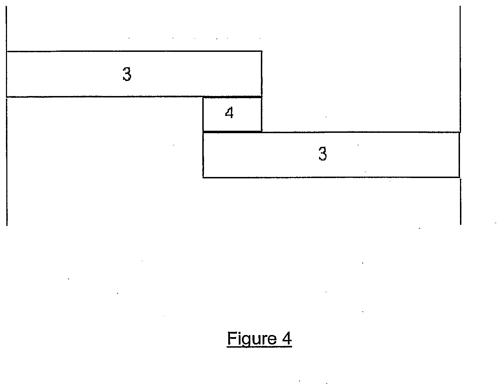

Figure 4 shows a top view of the construction principle of a shearing micro-or nano-machine of the invention. The material sample to be tested 4 is schematised sandwiched between two actuators 3.

Figures 2 to 4 thus globally show that the arrangement of the actuator layers 3 and the test material 4 may be changed at will in order to realise various types of micro- and nano-machines according to this invention. In each arrangement, verniers may be lithographed on the actuator 3 in order to more easily measure displacements. Other measurements techniques based on piezoresistive layers or capacitive changes can also be used to measure the actuator displacement.

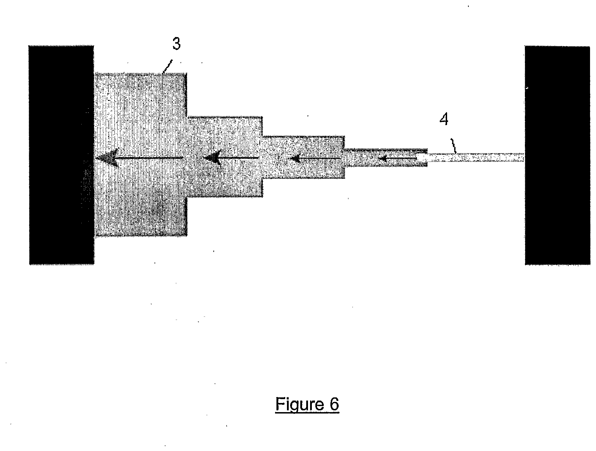

A particular embodiment of the present invention is schematised in Figure 6. In Figure 6, a micro- or nano-tensometer is represented wherein instead of using an unique actuator, i.e. a released beam with a fixed width, an actuator 3 is designed with a tapered section of varying width. Sections are released one at a time (the section the closest to the material sample to be tested 4 is released after a first etching period of time, the next section is released after a second etching step, and so on) by lateral wet or dry etching of the corresponding portion of the substrate or the sacrificial layer under them (3, 4). It means that a unique material sample to be tested 4 can be used for measuring several strain states (for example four different ones as shown in Figure 6). The mechanical analysis of this system is qualitatively similar to the constant width actuator analysis but requires summing in series the contributions of the different actuator parts.

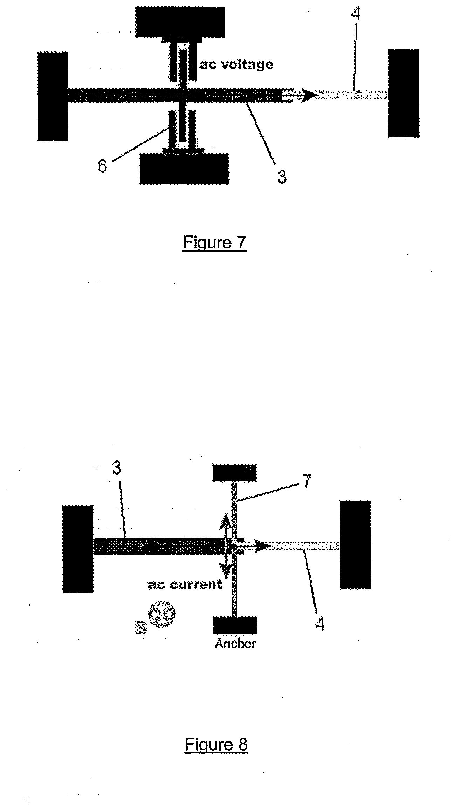

Another particular embodiment of the present invention is schematised in Figure 7. In Figure 7, a micro- or nano-tensometer is represented wherein a small amount of additional stress is applied to the material sample to be tested 4 using an electrical force. A small dynamic deformation is induced around the static strain of thermal origin existing along the length of the actuator 3. This deformation is obtained by applying a voltage across interdigitated electrodes, forming therefore a condensator 6.

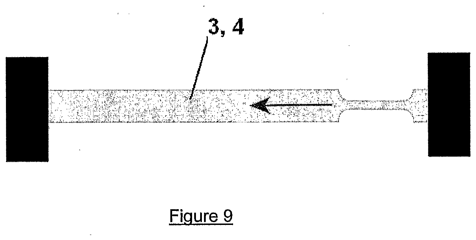

Another particular embodiment of the present invention is schematised in Figure 8. In Figure 8, a micro- or nano-tensometer is represented wherein a small amount of additional stress is applied to the material sample to be tested 4 using a magnetic force. This force is induced by a current is flowing through a released beam 7 mechanically linked to the actuator 3 and the material sample to be tested 4. An embodiment according to the prior art is schematised in Figure 9. In Figure 9, Instead of using an actuator 3 made from another material than the material sample to be tested 4, the internal stress in the material to be tested 4 itself is used as the acting force to deform a reduced portion of the released material sample to be tested 4, as shown in Figure 9. In that case the material sample to be tested 4 is at the same time its own actuator 3. The internal stress and strain are deduced using the same method as for the case where the actuator is a different entity made of a different material. This configuration is preferentially used for material presenting relatively large internal tensile stresses.

As stated herein-above, one important feature of this invention is a step providing release of the structure, i.e. release of the actuator and the sample. Once all the deposits and the lithographic steps have been performed, the whole structure is released, meaning, for example, that a sacrificial layer placed below the beams is removed. This release may be performed via an appropriate etching of the material to be tested. If the beams are deposited directly on the substrate, the whole structure is released by etching the portion of the substrate below the beams. Appropriate etching means selective etching, i.e. that the etching substance is selected according to its selectivity with respect to the material to be tested. Appropriate selection of the etching substance is within the general knowledge of the person skilled in the art. For instance it is known that concentrated fluorhydric acid exhibits a good selectivity towards aluminium. Preferably, the etching solution etches properly the sacrificial layer without attacking the actuator and material to be tested, i.e. the etching solution is preferably characterised by a good etching selectivity between the sacrificial layer (or the substrate if no sacrificial layer is used) and the actuator and material sample to be tested. A selectivity ratio of 10 to 1 is useful but higher ratios are preferred. Examples of etching solutions comprises but are not limited to hydrofluoric acid based solution for etching silicon dioxide, Tetramethylammonium hydroxide (TMAH) based solution for etching polysilicon or silicon or amorphous silicon, hydrogen peroxide ($H_2O_2$) for etching tungsten and hydrofluoric acid / nitric acid / acetic acid mixture (HNA) based solutions for etching doped silicon or polysilicon among others.

By releasing the structure in this way, the beams of the actuator and the beams of the material to be tested are freed and consequently are no longer resting on anything. If necessary under certain circumstances, i.e. for certain combinations of materials, the bonding effect which may be observed between the substrate and the released structure may be avoided by means of supercritical drying of the sample, e.g. making use of a so-called "critical point dryer ".

Operation of the micro- or nano-machine of this invention, in particular measurement of the differential displacements and deformations, is as follows. By varying the lengths of the actuator and of the material to be tested, the imposed deformation can be varied. In this way, each elementary machine made of one actuator and one test sample allows to measure one internal stress/deformation couple for the material to be tested. With several elementary machines, a complete curve representing the internal stress variation as a function of the deformation can be drawn. The displacements can be directly measured by using the directly lithographed measurement devices (such as, but not limited to, verniers, piezoresistive or capacitive systems) or by simple image analysis of the full structure displacement. In the latter embodiment, pictures are taken, after release of the structure, by means of scanning electron microscopy (herein-after referred as SEM). Such largely magnified pictures are then assembled in order to precisely determine displacements. Using the above methodology, displacements of the test material sample and/or of the actuator can be determined. Fully automated procedures can easily be implemented owing to the possibility to integrate the micro- or nano-machine of the invention together with the electronics on the same chip, which is the basic idea of a MEMS device.

Deformation of the test material can be directly inferred from the measured displacements. By comparing the displacement of the actuator to the theoretical or measured displacement obtained from the thermal deformation of a free actuator, the elastic deformation of the actuator which is due to the constraint imposed by the test material (e.g. aluminium), can be deduced. By assuming that the actuator remains within an elastic regime and that the Young's modulus of the actuator is known, the internal stress can be calculated. A simple ratio of the actuator and the test material sections permits then to deduce the internal stress present in the material to be tested. Each test material sample requires specific, but very simple, design rules in order to specify a range of actuator sections with respect to the test material section which provide enough differential displacements (if the constraint imposed by the test material is too small, the differential displacement between a free and a connected actuator will be too small with respect to the accuracy attained in the displacement measurement, which depends on the specific choice of measurement set up. This is exactly similar to the classical mechanical testing approach when one has to select an adapted load cell). If necessary for a specific industrial purpose, this whole process can easily be automated.

Thanks to the conceptual simplicity of the micro- and nano-machines of this invention, their manufacturing process is straightforward and reliable. In its simplest version, the full micro-fabrication process requires only three film depositions and two photolithographic steps in order to build a microstructure that can be operated for precise measurements of mechanical properties.

This concept of a micro-machine device for testing thin films of materials such as, but not limited to, metals, silicon-based materials and carbon-based materials, avoids the use of any external device to impose the load or to support the test material and therefore solves many of the problems encountered in the prior art.

The precision of mechanical properties measurements achieved by means of the present invention depends in the case of thermal stress upon the level of difference between the thermal expansion coefficients of the actuator and the substrate, multiplied by the difference between the deposition temperature and the test temperature. This product multiplied by the length of the actuator provides the imposed displacement. This product must be as large as possible in order to decrease the length of the actuator required to provide the displacements of interest. In one embodiment of the invention, this product is preferably at least equal to $1.0 \cdot 10^{-3}$, more preferably at least $3.0 \cdot 10^{-3}$, and most preferably at least $1.0 \cdot 10^{-2}$. In the case of a mechanical origin of the internal stresses, the imposed elastic strain prior deposition must be as large as possible in order to decrease the length of the actuator required to provide the displacements of interest. In one embodiment of the invention, this product is preferably at least equal to $1.0 \cdot 10^{-3}$, more preferably at least $3.0 \cdot 10^{-3}$, and most preferably at least $1.0 \cdot 10^{-2}$. In the case of a growth stress origin of the internal stresses, the elastic strain associated to the growth stress must be as large as possible in order to decrease the length of the actuator required to provide the displacements of interest. In one embodiment of the invention, this product is preferably at least equal to 1.0 10⁻³, more preferably at least 3.0 10⁻³, and most preferably at least 1.0 10⁻².

In view of its simplicity and effectiveness, the present invention is widely applicable to a large range of sample materials, each of them being in a wide range of thicknesses, widths and geometries.

Thin and ultra-thin film materials that can be used for the performance of the invention include, but are not limited to:

- metals and metal alloys such as, but not limited to, aluminium, steel, stainless steel, titanium, nickel, and the like,
- silicon-based materials such as, but not limited to, various grades of silicon chips, silicon carbide, and the like,
- germanium based materials,
- carbon-based materials such as, but not limited to, carbon nano-tubes, carbon nano-wires, carbides and the like, and
- polymer based materials, in particular conductive polymers such as, but not limited to, polyaniline, polypyrol, polyethylene terephthalate/ polyaniline composites, and acid-doped versions thereof.

The present invention is widely applicable to mono-layer thin and ultra-thin films as well as multi-layer films, whatever the number of layers in their structure and the thickness of each layer. The range of thickness for the thin or ultra-thin layer film to be tested according to the method and device of the invention preferably ranges from about 1 nm to about 5 $\mu$m, more preferably from about 5 nm to about 2 $\mu$m, and most preferably from about 10 nm to about 1 $\mu$m. The present invention is widely applicable to mono-layer beams as well as multi-layer beams, whatever the number of layers in their structure. A beam has a width which is on the order of the thickness. The range of dimensions for the small beam to be tested according to the method and device of the invention preferably ranges from about 1 nm to about 5 $\mu$m, more preferably from about 5 nm to about 2 $\mu$m, and most preferably from about 10 nm to about 1 $\mu$m.

The basic principles of the present invention will now be illustrated in a particular example which is not meant to restrict its scope but to contribute to understanding the invention with regard to a practical embodiment thereof.

EXAMPLE - manufacturing and operation of a tensile testing micromachine

An exemplary tensile testing micro-machine according to the invention is shown in figure 1. A beam of silicon nitride (actuator) applies a displacement onto an aluminium beam (film to be tested) when the latter contracts after release.

First, a 1 pm-thick PECVD (Plasma Enhanced Chemical Vapour Deposition) oxide (sacrificial layer) has been deposited on top of a bulk silicon wafer (handling substrate). Secondly, a LPCVD (Low Pressure Chemical Vapour Deposition) silicon nitride film of 250 nm has been deposited at around 800°C and patterned by dry etching (e.g. using $CHF_3$ and $O_2$ plasma) in order to define the actuator beam. Then an aluminium layer (250 nanometer thick in a first example and 500 nanometer thick in a second example) has been evaporated in an E-gun vacuum system at a temperature of around 150°C and patterned in a chlorine-based plasma ($Cl_2$ and $CCl_4$). Finally, the release of both beams (actuator and tested material) has been performed by wet etching of the PECVD silicon oxide (sacrificial layer). This wet etching has been achieved in a mixture of concentrated fluorhydric acid (hereinafter HF; concentration: 73%) and isopropanol (hereinafter IPA), the HF:IPA ratio being 1:1. Rinsing has then been performed with isopropanol. The use of water should preferably be avoided in this embodiment because mixtures of HF and water tend to etch aluminium. The micro-machine thus obtained were then be placed in a CPD (Critical Point Dryer) machine in order to dry the sample without occurrence of friction problems between the released beams and the substrate.

The data reduction scheme which has been used for operation of this micro- or nano-machine is as follows.

After chemical release of the structure, SEM observations have been immediately carried out in order to avoid possible creep contributions which could relax the internal stress in the aluminium film. The displacement of the aluminium beams and of the actuator beams have been measured on high magnification micrographs. The displacement of the aluminium beam has been directly related to the logarithmic strain (which is a more physical measure than the engineering strain when the strains are large) by the following equation:

$$\varepsilon^{mech} = \ln\left(1 + \frac{\Delta l}{l_0}\right) + \left(\alpha_{sub} - \alpha\right)\Delta T \qquad (1)$$

where

- $l_0$ is the initial length of the test material beam before release (i.e. at room temperature),
- $\Delta l$ is the measured displacement,
- $\alpha_{sub}$ and $\alpha$ are the thermal expansion coefficients of the substrate and test material, respectively,

Equation (1) provides an expression for the mechanical strain (i.e. total strain minus thermal strain) which is the most meaningful measure of deformation for the purpose of evaluating mechanical properties. For most material sample to be tested and in the present case in particular equation (1) can be simplified as,

$$\varepsilon_{al} = \ln\left(\frac{l_{al}}{l_{al}^0}\right) = \ln\left(\frac{l_{al}^0 + \Delta l_{al}}{l_{al}^0}\right) \; , \tag{2}$$

because the thermal expansion mismatch $(\alpha_{sub} - \alpha)\Delta T$ in the case of aluminium is small
where

- $l_{al}^0$ is the initial length of the aluminium beam before release (i.e. at room temperature),
- $l_{al}$ the length of the aluminium beam after release, and
- $\Delta l_{al}$ is the measured displacement.

Note that the initial length of the aluminum beam $l_{al}^0$ is the length deposited corrected by the thermal strain involves by the temperature of the deposition:

$$l_{al}^0 = l_{al}^d \left(1 - \alpha_{Si}\Delta T\right) \tag{3}$$

with $l_{al}^d$ the length of the aluminium beam deposited, $\alpha_{Si}$ the thermal expansion coefficient of the silicon wafer and $\Delta T$ the difference of temperature between the deposition and the room temperatures.
The strain in the actuator beam is calculated in much the same way. The mechanical strain in the actuator is equal to

$$\varepsilon_{act}^{mech} = \ln\left(\frac{l_{0act} - \Delta l}{l_{0act} - \Delta l_{free}}\right) \tag{4}$$

the subscript *"act"* refers to the actuator material and $\Delta l_{free}$ is the displacement of a free actuator beam with the same initial length. The free displacement $\Delta l_{free}$ is thus proportional to $l_{0act}$ and must be measured only once. It could also be evaluated theoretically as the product of the actuator length, of the difference between the thermal expansion coefficients of the actuator and substrate and the difference between the deposition temperature and test temperature, Then, assuming that the actuator remains purely elastic, the elastic strain and the internal stress in the actuator are related by Hooke's law (in mono-axial tension as follows:

$$\sigma_{act} = E_{act}\left(\varepsilon_{act}^{tot} - \Delta\varepsilon_{act}^{th}\right) = E_{act}\varepsilon_{act}^{mech} \tag{5}$$

where:

- $E_{act}$ *is* the Young modulus of the nitride in the present application. This modulus has been measured by nano-indentation and has been found to be equal to about 220 GPa which is in the range of the values usually found in the literature.

Knowing the thickness of the actuator beam and the thickness of the aluminium beams, the internal stress in the aluminium beam corresponding to the strain obtained by (1) may be calculated as:

$$\sigma_{al} = \sigma_{act} \frac{S_{act}}{S_{al}} \qquad\qquad (6)$$

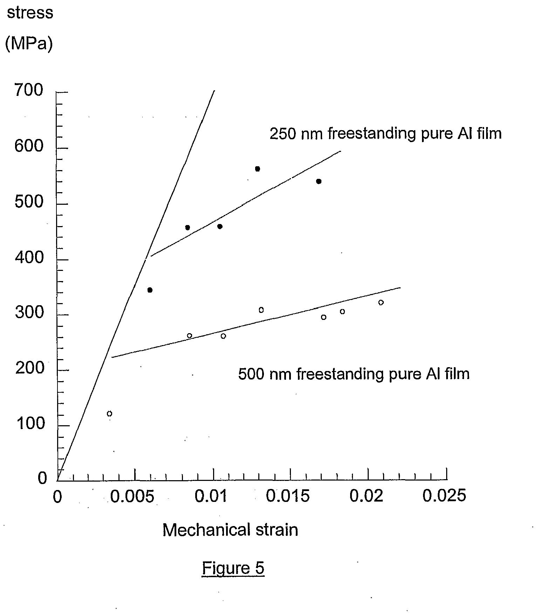

wherein $S_{act}$ and $S_{al}$ are the cross-section areas of the actuator and the aluminium beams, respectively. For small strains, the ratio $S_{act}/S_{al}$ can be considered as constant. On each couple actuator beam/aluminium film an internal stress and a strain in the aluminium film have been calculated. Thus a complete internal stress/strain curve has been obtained using different initial lengths of actuator and aluminium beam as shown in Figure 5.

Figure 5 shows two internal stress/strain curves obtained using such a micro-machine device with different films lengths for a 250-nm-thick aluminium film (first example) and a 500-nm-thick aluminium film (second example). The elastic regime, being characterised by a Young's modulus of 70 GPa, is also drawn in Figure 5. The measured yield (internal) stress is equal to about 220MPa for the 500-nm-thick aluminium and 400 MPa for the 250-nm-thick aluminium.

The above concept has also been successfully extended to other loading modes such as shear and compression.

Further characterisation of the obtained aluminium film:

The EBSD (Electron BackScattered Diffraction) technique has been used in order to determine the microstructure of deposited, aluminium film. The measurement of the grains orientation has been performed using a LEO Supra 55 SEM with a HKL Channel 5. The accelerating tension was set up to 20 kV and the sample was tilted to 70°. No sample preparation has been carried out. A map has been obtained showing the different grains and their orientations perpendicular to the observation plane. The aluminium grains have been shown to have a rounded shape with a diameter in the range of 100 to 500 nm. The obtained grains are very small and this can explain the high values of yield strength found in this example when compared to literature results. At last, all the grains are oriented in the same direction with the <111 > axis perpendicular to the film surface.

In this example, the mechanical response of submicron aluminum films has been investigated using a nano- or micromachine according an embodiment of the present invention. This nano- or micromachine has used the thermal stress resulting from the difference of thermal expansion coefficients between an actuator and the aluminium film to produce a displacement. Yield strength has been measured on films with two different thicknesses. The value of yield strength found as well as the increasing yield strength with the decreasing thickness of the film was in accordance with the literature results. EBSD measurements have shown that the grain size was about 250 nm in a 250 nm-thick film and that all the grains were well oriented with their <111> axis in the thickness direction. This illustrates the usefulness of the present invention to obtain the mechanical properties of thin film in a straightforward way. Similar measurement can be extended to other internal stress state, other materials and other films thicknesses. Some heat treatments can be carried out to, for instance, change the grains size and to investigate the influence of the grain size on the mechanical properties of thin film for a given thickness.

## Claims

1. A micro- or nano-tensometer for measuring one or more mechanical and/or electromechanical and/or opticomechanical, and/or chemico-mechanical and/or thermomechanical properties on a micro- or nano-size material sample, said micro- or nano-tensometer comprising a substrate (1), and an actuator (3) connected to said micro- or nano-size material sample (4), **characterised in that** the actuator is made from another material than said micro- or nano-size material sample, and internal stress present in said actuator provides, after chemical and/or physical release, a deformation of said micro- or nano-size material sample from which said mechanical and/or electromechanical and/or opticomechanical, and/or chemico-mechanical and/or thermomechanical properties of the micro- or nano-size material sample can be determined.

2. The micro- or nano-tensometer according to claim 1, wherein said actuator comprises an actuating material selected from the group consisting of silicon nitride, tungsten carbide, aluminium oxide, iron, copper, aluminium nitride, silicon carbide, tungsten, boron carbide and titanium.

3. The micro- or nano-tensometer according to claim 1 or claim 2, wherein the micro- or nano-size material sample to be tested is a thin aluminium film or is a polymer.

4. The micro- or nano-tensometer according to claim 1 or claim 2, wherein the micro- or nano-size material sample to be tested is silicon-based or is carbon based.

5. The micro- or nano-tensometer according to any one of claims 1 to 4, wherein one or more dimensions of the micro- or nano-size material sample to be tested is from about 1 nm to about 5 $\mu$m.

6. The micro- or nano-tensometer according to any one of claims 1 to 5, wherein the actuator, the substrate, and the micro- or nano-size material sample to be tested are arranged for traction measurement, for compression measurement or for shear measurement.

7. The micro- or nano-tensometer according to any one of claims 1 to 6, wherein the section of said actuator varies along its length.

8. The micro- or nano-tensometer according to claim 7, wherein said actuator comprises at least two uniform portions of different sections.

9. The micro- or nano-tensometer according to any one of claims 1 to 8 further comprising a sacrificial layer (2) in contact with the actuator, the material sample and the substrate material.

10. The micro- or nano-tensometer according to any one of claims 1 to 9 further comprising one or more means for applying additional stress on said micro- or nano-size material sample to be tested.

11. The micro- or nano-tensometer according to any one of claims 1 to 10 wherein the micro- or nano-size material sample to be tested is connected to both the actuator and the substrate.

12. The micro- or nano-tensometer according to any of claims 1 to 11 wherein said internal stress is of thermal, growth or mechanical origin.

13. A method for measuring one or more mechanical and/or electromechanical and/or optiomechanical, and/or chemico-mechanical and/or thermomechanical properties on a micro- or nano-size material sample (4), comprising the steps of:

   - providing one or more micro- or nano-tensometer, each comprising an actuator (3) involving internal stresses, a material sample to be tested and a substrate (1), wherein in each of said one or more elementary micro- or nano-tensometers, the material sample to be tested is connected to both the actuator and the substrate,
   - releasing chemically and/or physically said material sample to be tested and said actuator in each of said one or more micro- or nano-tensometers,
   - measuring the displacement of the material sample to be tested and/or an electric current through the material to be tested and/or an optical signal from or through the sample to be tested and/or a physico-chemical state of the material to be tested in each of said one or more micro- or nano-tensometers, and
   - determining from said displacement and/or electric current and/or optical signal and/or physico-chemical state the one or more mechanical and/or electromechanical and/or opticomechanical, and/or chemico-mechanical and/or thermomechanical properties of the micro- or nano-size material sample, wherein

   said providing one or more tensometers comprises providing one or more tensometers each comprising an actuator made from another material than the micro- or nano-size material sample and, said releasing comprises releasing internal stress in the actuator for providing a deformation of the micro- or nano-size material sample.

14. The method for measuring a mechanical property according to claim 13 further comprising the step of applying one or more additional stresses on said micro- or nano-size material sample.

15. A method for manufacturing a micro- or nano-tensometer according to claim 1 comprising the steps of:

   a) providing a substrate (1) at a first temperature,
   b) connecting an actuator (3) to said substrate at a second temperature,
   c) connecting a micro or nano-material sample to be tested (4) to said substrate and to said actuator at a third temperature,

   wherein said first, second and third temperatures are different or the same, and wherein the actuator is made from another material than said micro- or nano-size material sample.

16. The method according to claim 15 for manufacturing a micro- or nano-tensometer, further comprising the step of exposing the micro- or nano-tensometer obtained in claim 15 to a temperature different from at least one of said first, second and third temperature.

**Patentansprüche**

1. Mikro- oder Nanotensometer zum Messen von einer oder mehr mechanischen und/oder elektromechanischen und/oder optomechanischen und/oder chemomechanischen und/oder thermomechanischen Eigenschaften an einer Materialprobe im Mikro- oder Nanomaßstab, wobei das Mikro- oder Nanotensometer ein Substrat (1) und einen Auslöser (3), der mit der Materialprobe (4) im Mikro- oder Nanomaßstab verbunden ist, umfasst, **dadurch gekennzeichnet, dass** der Auslöser aus einem anderen Material als die Materialprobe im Mikro- oder Nanomaßstab hergestellt ist, und eine in dem Auslöser vorhandene Innenspannung nach einer chemischen und/oder physikalischen Freisetzung eine Verformung der Materialprobe im Mikro- oder Nanomaßstab erbringt, aus der die mechanischen und/oder elektromechanischen und/oder optomechanischen und/oder chemomechanischen und/oder thermomechanischen Eigenschaften der Materialprobe im Mikro- oder Nanomaßstab bestimmt werden können.

2. Mikro- oder Nanotensometer nach Anspruch 1, wobei der Auslöser ein Auslösematerial umfasst, das aus der Gruppe bestehend aus Siliciumnitrid, Wolframcarbid, Aluminiumoxid, Eisen, Kupfer, Aluminiumnitrid, Siliciumcarbid, Wolfram, Borcarbid und Titan ausgewählt ist.

3. Mikro- oder Nanotensometer nach Anspruch 1 oder 2, wobei die zu testende Materialprobe im Mikro- oder Nanomaßstab eine dünne Aluminiumfolie ist oder ein Polymer ist.

4. Mikro- oder Nanotensometer nach Anspruch 1 oder 2, wobei die zu testende Materialprobe im Mikro- oder Nanomaßstab siliciumbasiert ist oder kohlenstoffbasiert ist.

5. Mikro- oder Nanotensometer nach einem der Ansprüche 1 bis 4, wobei eine oder mehr Abmessungen der zu testenden Materialprobe im Mikro- oder Nanomaßstab von etwa 1 nm bis etwa 5 $\mu$m betragen.

6. Mikro- oder Nanotensometer nach einem der Ansprüche 1 bis 5, wobei der Auslöser, das Substrat und die zu testende Materialprobe im Mikro- oder Nanomaßstab zur Zugkraftmessung, zur Druckkraftmessung oder zur Scherkraftmessung eingerichtet sind.

7. Mikro- oder Nanotensometer nach einem der Ansprüche 1 bis 6, wobei der Abschnitt des Auslösers entlang seiner Länge variiert.

8. Mikro- oder Nanotensometer nach Anspruch 7, wobei der Auslöser mindestens zwei einheitliche Teile unterschiedlicher Abschnitte umfasst.

9. Mikro- oder Nanotensometer nach einem der Ansprüche 1 bis 8, das weiterhin eine Opferschicht (2) in Kontakt mit dem Auslöser, der Materialprobe und dem Substratmaterial umfasst.

10. Mikro- oder Nanotensometer nach einem der Ansprüche 1 bis 9, das weiterhin ein oder mehr Mittel zum Anwenden einer zusätzlichen Spannung auf die zu testende Materialprobe im Mikro- oder Nanomaßstab umfasst.

11. Mikro- oder Nanotensometer nach einem der Ansprüche 1 bis 10, wobei die zu testende Materialprobe im Mikro- oder Nanomaßstab mit sowohl dem Auslöser als auch dem Substrat verbunden ist.

12. Mikro- oder Nanotensometer nach einem der Ansprüche 1 bis 11, wobei die Innenspannung einen Wärme-, Wachstums- oder mechanischen Ursprung hat.

13. Verfahren zur Messung von einer oder mehr mechanischen und/oder elektromechanischen und/oder optomechanischen und/oder chemomechanischen und/oder thermomechanischen Eigenschaften an einer Materialprobe (4) im Mikro- oder Nanomaßstab, umfassend die Schritte:

   - Bereitstellen von einem oder mehr Mikro- oder Nanotensometern, wobei jedes einen Auslöser (3), der Innenspannungen einbezieht, eine zu testende Materialprobe und ein Substrat (1) umfasst, wobei in jedem des einen oder der mehreren grundlegenden Mikro- oder Nanotensometer die zu testende Materialprobe mit sowohl dem Auslöser als auch dem Substrat verbunden ist,
- chemisches oder physikalisches Freisetzen der zu testenden Materialprobe und des Auslösers in jedem des einen oder der mehreren Mikro- oder Nanotensometer,
- Messen der Verlagerung der zu testenden Materialprobe und/oder eines elektrischen Stroms durch das zu testende Material und/oder eines optischen Signals von der oder durch die zu testende Probe und/oder eines physikochemischen Zustands des zu testenden Materials in jedem des einen oder der mehreren Mikro- oder Nanotensometer und
- Bestimmen der einen oder der mehreren mechanischen und/oder elektromechanischen und/oder optomechanischen und/oder chemomechanischen und/oder thermomechanischen Eigenschaften der Materialprobe im Mikro- oder Nanomaßstab aus der Verlagerung und/oder dem elektrischen Strom und/oder dem optischen Signal und/oder dem physikochemischen Zustand, wobei

das Bereitstellen von einem oder mehr Tensometern das Bereitstellen von einem oder mehr Tensometern umfasst, die jeweils einen Auslöser umfassen, der aus einem anderen Material als die Materialprobe im Mikro- oder Nanomaßstab hergestellt ist, und das Freisetzen das Freisetzen einer Innenspannung in dem Auslöser zum Erbringen einer Verformung der Materialprobe im Mikro- oder Nanomaßstab umfasst.

14. Verfahren zur Messung einer mechanischen Eigenschaft nach Anspruch 13, das weiterhin den Schritt des Anwendens von einer oder mehr zusätzlichen Spannungen auf die Materialprobe im Mikro- oder Nanomaßstab umfasst.

15. Verfahren zur Fertigung eines Mikro- oder Nanotensometers nach Anspruch 1, umfassend die Schritte:

a) Bereitstellen eines Substrats (1) bei einer ersten Temperatur,
b) Verbinden eines Auslösers (3) mit dem Substrat bei einer zweiten Temperatur,
c) Verbinden einer zu testenden Materialprobe (4) im Mikro- oder Nanomaßstab mit dem Substrat und dem Auslöser bei einer dritten Temperatur,

wobei die erste, die zweite und die dritte Temperatur verschieden oder gleich sind und wobei der Auslöser aus einem anderen Material als die Materialprobe im Mikro- oder Nanomaßstab hergestellt ist.

16. Verfahren nach Anspruch 15 zur Fertigung eines Mikro- oder Nanotensometers, das weiterhin den Schritt des Aussetzens des in Anspruch 15 erhaltenen Mikro- oder Nanotensometers gegenüber einer Temperatur umfasst, die sich von mindestens einer der ersten, der zweiten und der dritten Temperatur unterscheidet.

**Revendications**

1. Micro- ou nanotensiomètre destiné à mesurer une ou plusieurs propriétés mécaniques et/ou électromécaniques et/ou opticomécaniques et/ou chimicomécaniques et/ou thermomécaniques sur un échantillon de matériau de taille micro- ou nanométrique, ledit micro- ou nanotensiomètre comprenant un substrat et un actionneur (3) raccordé audit échantillon de matériau de taille micro- ou nanométrique (4),
**caractérisé en ce que** l'actionneur est constitué d'un autre matériau que ledit échantillon de matériau de taille micro- ou nanométrique, et **en ce que** la tension interne présente dans ledit actionneur produit, après libération chimique et/ou physique, une déformation dudit échantillon de matériau de taille micro- ou nanométrique, d'où on peut déterminer lesdites propriétés mécaniques et/ou électromécaniques et/ou opticomécaniques et/ou chimicomécaniques et/ou thermomécaniques.

2. Micro- ou nanotensiomètre selon la revendication 1, dans lequel ledit actionneur comprend un matériau d'actionnement choisi dans le groupe constitué du nitrure de silicium, du carbure de tungstène, de l'oxyde d'aluminium, du fer, du cuivre, du nitrure d'aluminium, du carbure de silicium, du tungstène, du carbure de bore et du titane.

3. Micro- ou nanotensiomètre selon la revendication 1 ou 2, dans lequel ledit échantillon de matériau de taille micro- ou nanométrique à tester est un mince film d'aluminium ou est un polymère.

4. Micro- ou nanotensiomètre selon la revendication 1 ou 2, dans lequel ledit échantillon de matériau de taille micro- ou nanométrique à tester est à base de silicium ou de carbone.

5. Micro- ou nanotensiomètre selon l'une quelconque des revendications 1 à 4, dans lequel au moins une dimension de l'échantillon de matériau de taille micro- ou nanométrique à tester est d'environ 1 nm à environ 5 μm.

6. Micro- ou nanotensiomètre selon l'une quelconque des revendications 1 à 5, dans lequel l'actionneur, le substrat et l'échantillon de matériau de taille micro- ou nanométrique à tester sont disposés pour une mesure de traction, une mesure de compression ou une mesure de cisaillement.

7. Micro- ou nanotensiomètre selon l'une quelconque des revendications 1 à 6, dans lequel la section dudit actionneur varie sur sa longueur.

8. Micro- ou nanotensiomètre selon la revendication 7, dans lequel ledit actionneur comprend au moins deux parties uniformes de sections différentes.

9. Micro- ou nanotensiomètre selon l'une quelconque des revendications 1 à 8, comprenant en outre une couche sacrificielle (2) en contact avec l'actionneur, l'échantillon de matériau et le matériau de substrat.

10. Micro- ou nanotensiomètre selon l'une quelconque des revendications 1 à 9, comprenant en outre u moins un moyen d'appliquer une tension supplémentaire sur ledit échantillon de matériau de taille micro- ou nanométrique à tester.

11. Micro- ou nanotensiomètre selon l'une quelconque des revendications 1 à 10, dans lequel l'échantillon de matériau de taille micro- ou nanométrique à tester est raccordé à la fois à l'actionneur et au substrat.

12. Micro- ou nanotensiomètre selon l'une quelconque des revendications 1 à 11, dans lequel ladite tension interne est d'origine thermique, de croissance ou mécanique.

13. Procédé de mesure d'au moins une ou plusieurs propriétés mécaniques et/ou électromécaniques et/ou opticomécaniques et/ou chimicomécaniques et/ou thermomécaniques sur un échantillon de matériau de taille micro- ou nanométrique (4), comprenant les étapes consistant à :

- produire au moins un micro- ou nanotensiomètre, chacun comportant un actionneur (3) impliquant des tensions internes, un matériau d'échantillon à tester et un substrat (1), où dans chacun desdits au moins un micro- ou nanotensiomètres élémentaires, l'échantillon de matériau à tester est raccordé à la fois à l'actionneur et au substrat,
- libérer chimiquement et/ou physiquement ledit échantillon de matériau à tester et ledit actionneur dans chacun desdits au moins un micro- ou nanotensiomètres,
- mesurer le déplacement dudit échantillon de matériau à tester et/ou un courant électrique à travers le matériau à tester et/ou un signal optique en provenance ou à travers l'échantillon à tester et/ou un état physicochimique du matériau à tester dans chacun desdits au moins un micro- ou nanotensiomètres, et
- déterminer, à partir dudit déplacement et/ou dudit courant électrique et/ou dudit signal optique et/ou dudit état physicochimique, l'une ou plusieurs propriétés mécaniques et/ou électromécaniques et/ou opticomécaniques et/ou chimicomécaniques et/ou thermomécaniques de l'échantillon de matériau de taille micro- ou nanométrique,

dans lequel fournir au moins un tensiomètre comprend de fournir un ou plusieurs tensiomètres, chacun comprenant un actionneur constitué d'un autre matériau que l'échantillon de matériau de taille micro- ou nanométrique, et ladite libération comprend de libérer une tension interne dans l'actionneur pour produire une déformation de l'échantillon de matériau de taille micro- ou nanométrique.

14. Procédé de mesure d'une propriété mécanique selon la revendication 13, comprenant en outre l'étape d'application d'au moins une tension supplémentaire sur ledit échantillon de matériau de taille micro- ou nanométrique.

15. Procédé de fabrication d'un micro- ou nanotensiomètre selon la revendication 1, comprenant les étapes consistant à :

a) produire un substrat (1) à une première température,
b) raccorder un actionneur (3) audit substrat à une deuxième température,
c) raccorder un échantillon de matériau de taille micro- ou nanométrique à tester audit substrat et audit actionneur à une troisième température,

dans lequel lesdites première, deuxième et troisième températures sont différentes ou identiques, et dans lequel l'actionneur est constitué d'un autre matériau que ledit échantillon de matériau de taille micro- ou nanométrique.

16. Procédé selon la revendication 15 pour fabriquer un micro- ou nanotensiomètre, comprenant en outre l'étape d'exposer le micro- ou nanotensiomètre obtenu à la revendication 15 à une température différente d'au moins une desdites première, deuxième et troisième température.

Figure 1

Figure 2

Figure 3

Figure 4

stress

(MPa)

Figure 5

Figure 6

Figure 7

Figure 8

**3, 4**

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5310610 A

- WO 28277 A

**Non-patent literature cited in the description**

- Surface micromachined ring test structures to determine mechanical properties of compressive thin films. **KRAMER T et al.** SENSORS AND ACTUATORS A. ELSEVIER SEQUOIA S.A, 292-298